# EUROPEAN PATENT APPLICATION

(11) **EP 2 046 008 A1**
(43) Date of publication of application: **08.04.2009**
(21) Application number: 08706544.7
(22) Date of filing: 11.01.2008
(51) Int. Cl.: H04M 3/54

(54) **A METHOD, SYSTEM, SWITCH DEVICE AND SERVICE CONTROL POINT FOR IMPLEMENTING CALL FORWARD**

(30) Priority: 23.01.2007 CN 200710073027
(71) Applicant: Huawei Technologies Co., Ltd., Longgang District, Shenzhen Guangdong 518129 (CN)
(72) Inventor: YU, Qian, Shenzhen Guangdong 518129 (CN); MIAO, Shi, Shenzhen Guangdong 518129 (CN)
(74) Representative: Hengelhaupt, Jürgen
(86) International application number: PCT/CN2008/070085
(87) International publication number: WO 2008/089675

(57) **Abstract**

A method for implementing call forward comprises: in the case that the called party occurs the call forward, the called side notifies the message about the called party occurring the call forward to the calling side; after receiving the message, the calling side joints the call to the forwarded called party and charges the calling party based on the forwarded communication procedure. Accordingly, the present invention also discloses a corresponding system, switch device and service control point for processing the call forward service. The present invention can realize that the calling user pays the forwarded communication charge of the called side and extend the flexibility of the call forward service.

## Description

This application claims priority to Chinese Patent Application No. 200710073027.3, entitled "A METHOD, SYSTEM, SWITCH DEVICE AND SERVICE CONTROL POINT FOR IMPLEMENTING CALL FORWARD" and filed with the Chinese Patent Office on January 23, 2007, which is hereby incorporated by reference in its entirety.

### FIELD OF THE INVENTION

The present disclosure relates to the field of communication network technologies, especially to Intelligence Network technologies and in particular to a call forwarding method and a call forwarding service processing system, and a switching device and a service control point thereof.

### BACKGROUND OF THE INVENTION

In an Intelligence Network (IN) system, a call forwarding service is a common service currently including three types of Forwarding unconditional, Forwarding on no answer and Forwarding on busy. The implementation principle of the call forwarding service is that a call to a number is forwarded to another number for receiving by a user in some specific cases, for example, a call is forwarded to a mobile phone of the user for receiving when the call to a fixed-line phone at home has not been picked up for a long time, thereby the call forwarding is implemented.

Forwarding of a call at a called side is unknown to a calling side, i.e. the calling user still considers that the called user is receiving the call with the number called by the calling user, and a charging system at a network side charges the calling user based upon the number originally called by the calling user while charging the called user for an additional call forwarding fee. For example, a user B abroad typically purchases a new number locally for keeping communication with a domestic user, and after the user B subscribes for a call forwarding service, a call to his domestic number may be forwarded to the number abroad for receiving. In this case, it is common in the conventional technology that the calling user is not aware that the user B is receiving the international call, and the charging system at the network-side charges the calling user based upon the called domestic number of the user B while typically charging the called user B for a communication fee of forwarding the call from the domestic number to the number abroad.

### SUMMARY OF THE INVENTION

Embodiments of the disclosure provide a call forwarding method to charge a calling user instead of a called user for a communication fee of forwarding a call, thereby extending flexibility of a call forwarding service.
A call forwarding method according to the disclosure includes:
notifying, by a called side, a calling side of information regarding call forwarding of a first called user when the call to the first called user is forwarded; and
connecting, by the calling side, the call to a forwarded second called user according to the information.
A system for processing a call forwarding service according to the disclosure includes a called-side switching device, a calling-side switching device and a charging device, wherein:
the called-side switching device is adapted to notify the calling-side switching device of information regarding call forwarding of a first called user when the call to the first called user is forwarded; and
the calling-side switching device is adapted to connect the call to a second called user forwarded, in response to the received information.
Another system for processing a call forwarding service according to the disclosure includes a called-side switching device, a calling-side switching device and a calling-side charging device, wherein:
the called-side switching device is adapted to notify the calling-side charging device of a message regarding call forwarding of a called user in the case that the call to the called user is forwarded;
the charging device is adapted to instruct the calling-side switching device to connect the call to the forwarded called user upon receiving the message regarding call forwarding of the called user, and to charge a calling user based on the communication process with the forwarding when the calling-side switching device connects the call to the forwarded called user; and
the calling-side switching device is adapted to connect the call to the forwarded called user in response to the instruction of the calling-side charging device.
The disclosure further provides a switching device including:
a message notifying unit adapted to notify a service control point to which a calling user belongs of a message regarding call forwarding of a called user upon knowing that a call to be connected to the called user is forwarded; and
a connecting unit adapted to connect the call to the forwarded called user upon receiving an instruction to connect the call to the forwarded called user, which is sent from the service control point to which the calling user belongs.
Preferably, the switching device further includes:
a message reporting unit adapted to report to the service control point to which the calling user belongs a notification message regarding call forwarding of the called user, which is sent from a switching device where the called user is located, upon receiving the message when the calling user located at the switching device makes a call to the called user.
A service control point according to the disclosure includes:
a connecting instructing unit adapted to instruct a switching device where a calling user is located to connect a call to a forwarded called user in accordance with a received message regarding call forwarding of a called user; and
a charging unit adapted to charge the calling user for communication process after forwarding.
The disclosure further provides a charging method including:
notifying, by a called side, a calling side of information regarding call forwarding of a first called user when the call to the first called user is forwarded;
connecting, by the calling side, the call to a second called user forwarded, upon receiving the information; and
charging the calling user for process of communicating with the second called user.
In the technical solutions of the disclosure, when the call to the called user made by the calling user is forwarded, a communication control device to which the calling user belongs is notified of the forwarding message, and the communication control device to which the calling user belongs charges the calling user for the process of communicating with the forwarded called user, so that in the case that the calling user agrees on being charged for the fee of communication with the forwarded called user, the call forwarding service may be implemented. Therefore, the calling user is charged for the communication fee of the forwarding of a call to the called user in the call forwarding service, thereby further extending flexibility of the call forwarding service and enhancing control of the forwarding of a call to the called user.

### BRIEF DESCRIPTION OF THE DRAWINGS

Embodiments of the disclosure and advantageous effects attained particularly by the embodiments will be set forth in details below with reference to the drawings in which:

Figure 1 is a schematic diagram of the network architecture of an Intelligence Network where the disclosure is implemented;

Figure 2 is a flow chart of the process according to one embodiment of the disclosure;

Figure 3 is a flow chart of the process according to another embodiment of the disclosure;

Figure 4 is a block diagram of the component structure of the system for processing a forwarding service according to an embodiment of the disclosure;

Figure 5 is a block diagram of the component structure of the switching device according to one embodiment of the disclosure;

Figure 6 is a block diagram of the component structure of the switching device according to another embodiment of the disclosure; and

Figure 7 is a block diagram of the component structure of the SCP according to an embodiment of the disclosure.

### DETAILED DESCRIPTION OF THE INVENTION

An idea of technical solutions of the disclosure lies in that when a calling user makes a call to a called user, if the call to the called user is forwarded, the called side notifies the calling side of the forwarding information, and the calling side then connects the call to the forwarded called user and is charged for the process of communicating with the forwarded called user.

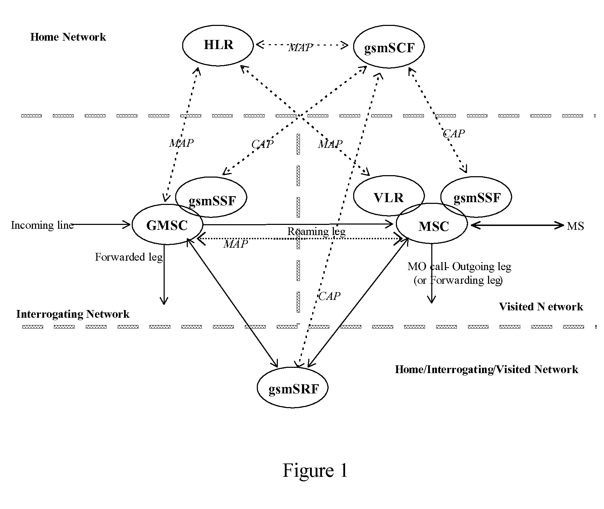

Figure 1 illustrates a schematic diagram of the network architecture of an Intelligence Network to which the disclosure is applied, where a gsmSCF is a core part of the Mobile Intelligence Network and typically includes a Service Control Point (SCP) onto which a service logic and user data are loaded; and the gsmSSF is responsible for connecting a call in cooperation with the MSC. When a user of the Mobile Intelligence Network initiates a call or is called, the MSC/SSP (the SSP is located in the part of gsmSSF) reports Initial Detect Point (IDP) signaling to the SCP so as to trigger a mobile intelligence service on the SCP, and the call process thereof is controlled by the SCP. After the call is triggered to the SCP, the SCP starts the intelligence service logic to execute basic processing of the call (e.g., to obtain the calling and called number, etc., through analysis), searches for the corresponding user data to authenticate the call, determines validity of the call from analysis of a user account, and if the call is valid, then requests the MSC-SCP to connect the call and charges the user, and finally when the user hangs up, the control process of the SCP ends, thus a call control is accomplished.

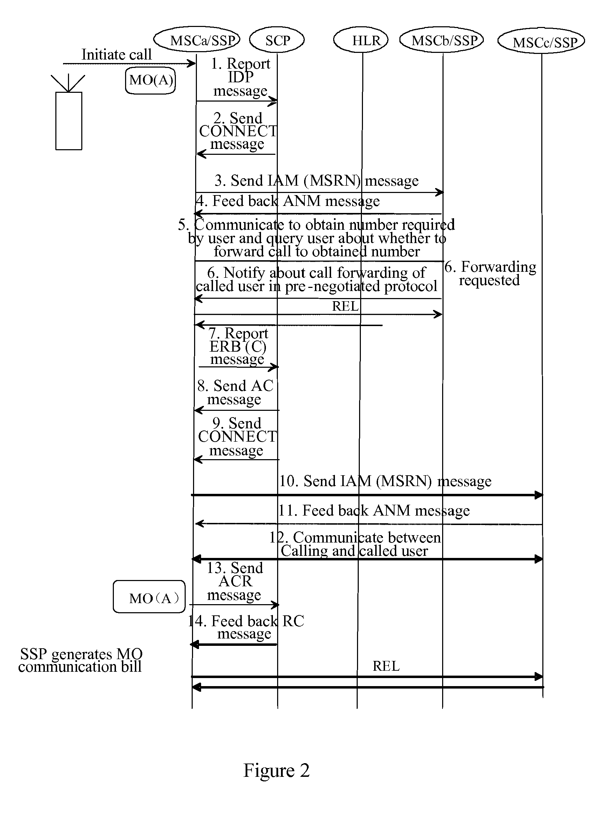

Figure 2 illustrates a flow chart of the process according to one embodiment of the disclosure in which when a user A makes a call to an information directory desk, and the information directory desk may search for a phone number desired by the user A and then may instruct a network switching device to forward the call from the user A to the obtained phone number, and a charging device at the network side may charge the user A for the process of communication with the obtained phone number. A specific process at the network side is as follows.

In the Step 1, when the user A initiates a call to the information directory desk, the MSCa/SSP in a network where the user A is located reports an IDP message to a SCP in the network where the user A is located.

In the Step 2, after authenticating the user A successfully, the SCP then sends to the MSCa/SSP a CONNECT message instructing the MSCa/SSP to connect the call from the user A to the MSCb/SSP in the network where the information directory desk is located.

In the Step 3, the MSCa/SSP sends an Initial Address Message (IAM) to the MSCb/SSP to connect the call to the information directory desk, and a Mobile Station Roaming Number (MSRN) of the user A is carried in the sent IAM message.

In the Step 4, the MSCb/SSP feeds back an Answer Message (ANM) to the MSCa/SSP, thereby connecting the call from the user A to the information directory desk.

In the Step 5, the information directory desk queries the user A about a phone number desired by the user A by means of communication with the user A, searches for the corresponding phone number in response to the request of the user A, and further queries the user A about whether to allow the call to be forwarded to the obtained phone number.

In the Step 6, if the user A requests the information directory desk to forward the call directly to the obtained phone number, then the information directory desk notifies in a notification message carrying the obtained phone number C the MSCa/SSP in the network where the user A is located in a predetermined protocol to instruct the MSCa/SSP to further forward the call to the obtained phone number C.

In the Step 7, the MSCa/SSP receives the notification message sent from the information directory desk and then sends to the SCP in the network where the user A is located an Event Report BCSM (ERB) message notifying the SCP of the forwarding of the called number and also carrying the forwarded phone number C (i.e., the phone number obtained by the information directory desk).

In the Steps 8 and 9, the SCP is aware that the called number has been forwarded to the number C from the received ERB message, budgets for the user A at a communication rate for a call from the user A to the phone number C, sends a CONNECT message to the MSCa/SCP in accordance with a budget result to instruct the MSCa/SSP to further connect the call from the user A to the forwarded number C, and sends an Apply Charging (AC) message to the MSCa/SSP to start charging the user A for communication with the forwarded number C; and if the budget is not enough for the communication between the user A with the forwarded number C, then the SCP may send a ReleaseCall message to the MSCa/SSP to instruct the MSCa/SSP not to connect the call from the user A to the forwarded phone number C.

In the Step 10, the MSCa/SSP sends an Initial Address Message (IAM) carrying the MSRN number of the user A to the MSCc/SSP where the forwarded number C is located in response to the instruction sent from the SCP to connect the call to the number C.

In the Step 11, the MSCc/SSP feeds back an Answer Message (ANM) to the MSCa/SSP, thereby putting through the communication between the user A and the obtained phone number C.

In the Step 12, the user A communicates with the called user of the phone number C and the SCP charges the user A at the communication rate from the user A to the user C.

In the Step 13, the MSCa/SSP reports an Apply Charging Report (ACR) message to the SCP at the end of the communication.

In the Step 14, upon receiving the ACR message, the SCP settles a fee of communication of the user A, issues a communication bill and sends to the MSCa/SSP a ReleaseCall (RC) message instructing the MSCa/SSP to release the call.

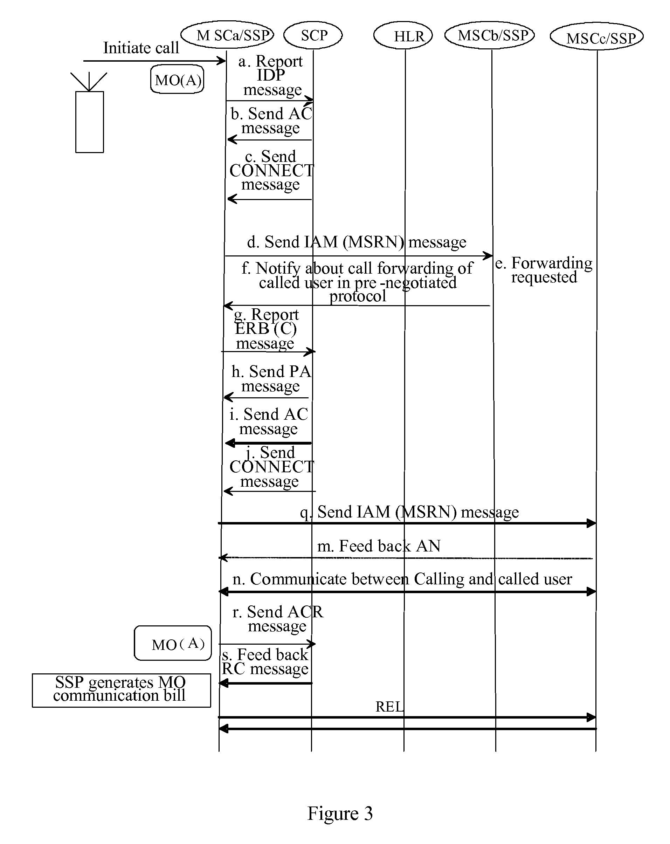

Figure 3 is a flow chart of the process according to another embodiment of the disclosure in which when a domestic calling user makes a call to a called user abroad, the calling user may be prompted that the called user is abroad and whether to forward the call to a number abroad of the called user for communication, and when forwarded, the calling user will be charged for a fee of the international call of the called user. A specific implementation process is as follows.

In the Step a, when a user A initiates a call to a called user, the MSCa/SSP in the network where the user A is located reports an IDP message to the SCP in the network where the user A is located.

In the Step b, after authenticating the user A successfully, the SCP then sends an AC message to the MSCa/SSP to start charging the user A.

In the Step c, the SCP sends to the MSCa/SSP a CONNECT message instructing the MSCa/SSP to connect the call from the user A to the MSCb/SSP in the network where the called user is located.

In the Step d, the MSCa/SSP sends an IAM message carrying an MSRN number of the user A to the MSCb/SSP to connect the call to the called user.

In the Steps e and f, since the called user abroad purchases a new local number abroad and subscribes for an international call forwarding service, i.e. to forward any call directed to the domestic number to the local number bought abroad for receiving, the MSCb/SSP discovers that the called user has subscribed for the call forwarding service upon receiving the IAM message and notifies the MSCa/SSP of a message regarding the call forwarding of the called user and his forwarded called number C (i.e., the local number bought aboard by the called user).

In the Step g, upon receiving the notification message sent from the MSCb/SSP, the MSCa/SSP then sends an ERB message carrying the forwarded phone number C to the SCP in the network where the user A is located to notify the SCP of the forwarding of the called number.

In the Step h, when aware of the forwarding of the called number to the number C from the received ERB message, the SCP plays a specific announcement to the calling user A through a PA message to prompt the user A of the forwarding of the called number and may further prompt in a friendly way the user A of a change in the communication fee and even further notify the user A of a communication rate to be applied for the user A to decide.

In the Steps i and j, the user A hearing the voice prompt may proceed with communication with the forwarded called user without taking any action if he decides to proceed with the communication; or the user A may instruct the SCP to interrupt communication by hanging up the call, or inputting a menu choice, etc., if he does not agree on communication with the forwarded called user. In the case that the user A chooses to proceed with communication, the SCP budgets at a communication rate for a call from the user A to the phone number C, sends a CONNECT message to the MSCa/SSP in accordance with a budget result to instruct the MSCa/SSP to further connect the call from the user A to the forwarded number C, and sends an Apply Charging (AC) message to the MSCa/SSP to start charging the user A for communication with the forwarded phone number C; and if the budget is not enough for communication between the user A with the forwarded number C, the SCP may send a ReleaseCall message to the MSCa/SSP to instruct the MSCa/SSP not to connect the call from the user A to the forwarded phone number C.

In the Step q, the MSCa/SSP sends an IAM message carrying the MSRN number of the user A to the MSCc/SSP where the forwarded number C is located in response to the instruction sent from the SCP to connect the call to the number C.

In the Step m, the MSCc/SSP feeds back an ANM message to the MSCa/SSP, thereby putting through the communication between the user A and the called user abroad using the number C.

In the Step n, the user A communicates with the called user using the phone number C and the SCP charges the user A at the communication rate from the user A to the user C.

In the Step r, the MSCa/SSP reports an ACR message to the SCP at the end of communication.

In the Step s, after receiving the ACR message, the SCP settles a fee of the communication of the user A, issues a communication bill and sends to the MSCa/SSP a Release Call (RC) message instructing the MSCa/SSP to release the call.

In the Step 7 of the above first embodiment and the Step g of the above second embodiment, in addition to using the ERB message, the MSCa/SSP may also report to the SCP the message regarding the call forwarding of the called user using an extended information element of an IDP or ACR message in the same principle as that using the ERB message, therefore, it will not be described again.

In the above two embodiments, the MSC/SSP where the called user was located before forwarding notifies the MSC/SSP where the calling user is located of the message regarding the call forwarding of the called user and further the MSC/SSP where the calling user is located reports to the SCP the call forwarding of the called user in an ERB, IDP or ACR message. Alternatively, the MSC/SSP where the called user was located before forwarding may notify directly the SCP where the calling user is located of the message regarding the call forwarding of the called user in an ERB, IDP or ACR message, and in this case since the SCP where the calling user is located may not determine which call is related to the notification from the MSC/SSP where the called user was located before forwarding when the MSC/SSP where the called user was located before forwarding notifies the SCP to which the calling user belongs, it is necessary to transport a call ID in the ERB, IDP or ACR message so that the SCP to which the calling user belongs may know the specific call in the sent notification and thereby may obtain information related to the original call.

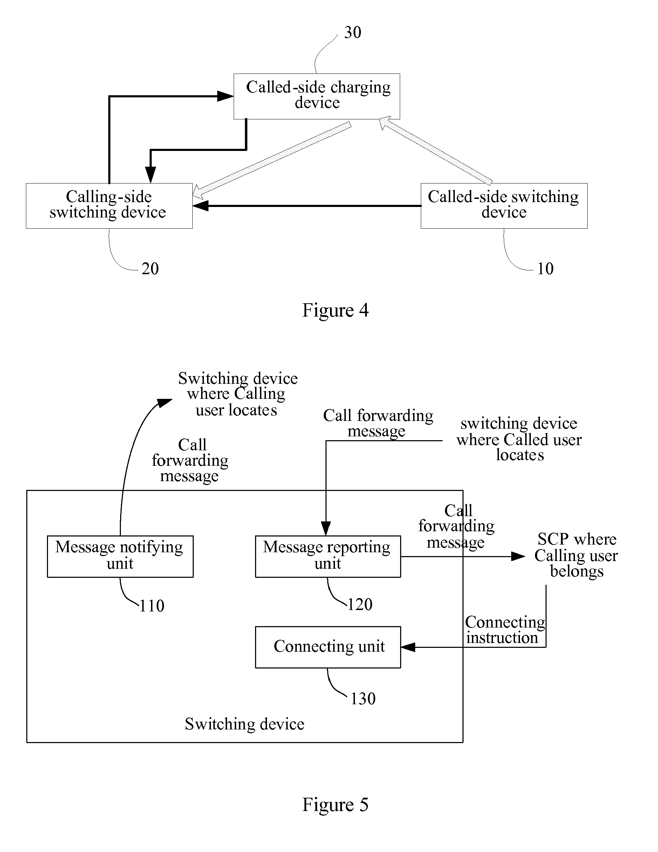

Figure 4 is a block diagram of the component structure of a system for processing a forwarding service according to an embodiment of the disclosure in which the called-side switching device 10 is adapted to notify the calling-side switching device 20 of a message regarding a call forwarding of a called user in the case that the call to the called user is forwarded, and the called-side switching device 10 may send a message regarding a call forwarding of the called user to the calling-side switching device 20 via a pre-negotiated protocol between them; the calling-side switching device 20 is adapted to report the received message regarding a call forwarding of the called user to the calling-side charging device 30 and to connect the call to the forwarded called user in response to an instruction of the calling-side charging device 30, where the calling-side switching device 20 may report the received message to the calling-side charging device 30 in an extended Event Report BCSM (ERB), IDP or ACR message; and the calling-side charging device 30 is adapted to instruct the calling-side switching device 20 to connect the call to the forwarded called user and to charge the calling user for communication after forwarding, and further the calling-side charging device 30 may instruct the calling-side switching device 20 to connect the call to the forwarded called user when the calling user agrees on communication with the forwarded called user and charge the calling user for communication after forwarding.

Additionally, the called-side switching device 10, the calling-side switching device 20 and the calling-side charging device 30 may also interact with each other as follows to achieve the object of the disclosure.

The called-side switching device 10 is adapted to notify the calling-side charging device 30 of a message regarding a call forwarding of the called user in the case that the call to the called user is forwarded, where the called-side switching device 10 may report to the calling-side charging device 30 the message regarding the call forwarding of the called user in an extended ERB, IDP or ACR message; the calling-side charging device 30 is adapted to instruct the calling-side switching device 20 to connect the call to the forwarded called user and to charge the calling user for communication after forwarding when the calling-side switching device 20 connects the call to the forwarded called user, and further the calling-side charging device 30 may instruct the calling-side switching device 20 to connect the call to the forwarded called user when the calling user agrees on communication with the forwarded called user and charge the calling user for communication after forwarding when the calling-side switching device 20 connects the call to the forwarded called user; and the calling-side switching device 20 is adapted to connect the call to the forwarded called user in response to the connecting instruction of the calling-side charging device 30.

Generally, the switching devices in the above system are MSC/SSP functional parts and the functions of the charging device are accomplished by the SSP.

Figure 5 is a block diagram of the component structure of a switching device according to one embodiment of the disclosure in which the message notifying unit 110 is adapted to notify the switching device where the calling user is located of the message regarding a call forwarding of the called user when knowing that the call to be connected to the called user is forwarded; the message reporting unit 120 is adapted to report to the SCP to which the calling user belongs the notification message regarding the call forwarding of the called user, which is sent from the switching device where the called user is located, when the calling user located at the switching device makes the call to the called user and receives the notification message, where the message reporting unit 120 may report the message regarding the call forwarding of the called user to the SCP where the calling user is located in an extended ERB, IDP or ACR message; and the connecting unit 130 is adapted to connect the call to the forwarded called user upon receiving the instruction to connect the call to the forwarded called user, which is sent from the SCP to which the calling user belongs.

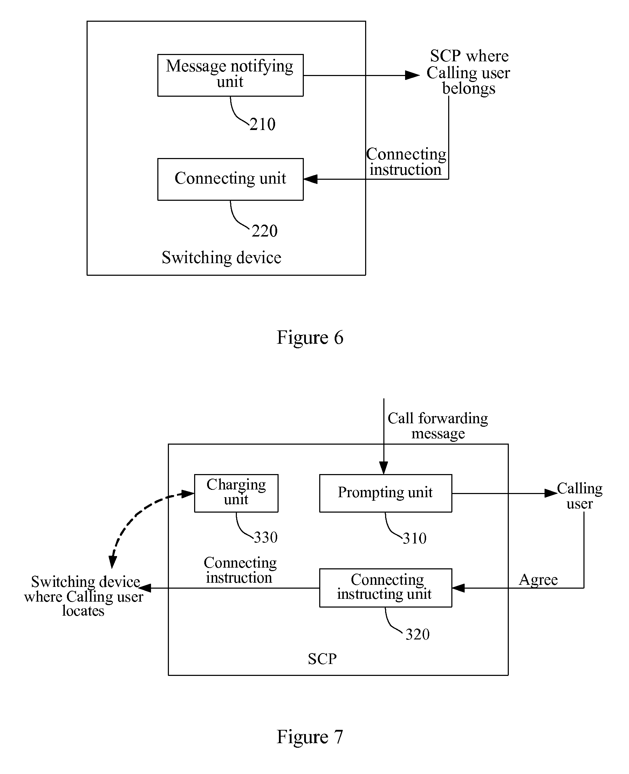

Figure 6 is a block diagram of the component structure of the switching device according to another embodiment of the disclosure in which the message notifying unit 210 is adapted to notify the SCP to which the calling user belongs of the message regarding the call forwarding of the called user upon knowing that the call to be connected to the called user is forwarded, and the message notification unit 210 may report the message regarding the call forwarding of the called user to the SCP to which the calling user belongs in an extended ERB, IDP or ACR message; and the connecting unit 220 is adapted to connect the call to the forwarded called user upon receiving the instruction to connect the call to the forwarded called user, which is sent from the SCP to which the calling user belongs.

Figure 7 is a block diagram of the component structure of the SCP according to an embodiment of the disclosure in which the prompting unit 310 is adapted to prompt the calling user of whether to agree to communicate with the forwarded called user in accordance with the received message regarding the call forwarding of the called user; the connecting instructing unit 320 is adapted to instruct the switching device where the calling user is located to connect the call to the forwarded called user when the calling user agrees on communication with the forwarded called user; and the charging unit 330 is adapted to charge the calling user for communication after forwarding.

In the technical solutions of the disclosure, the MSC and the SCP in the network cooperate in a way that the SCP to which the calling user belongs is notified of the forwarding message when the call to the called user made by the calling user is forwarded, and the SCP to which the calling user belongs charges the calling user for communication with the forwarded called user, so that in the case that the calling user agrees on being charged for the fee of communication with the forwarded called user, the call forwarding service may be implemented with extended flexibility and enhanced transparency of call forwarding to the calling user. Furthermore in the disclosure the devices in the network interact with each other based upon extended standard signaling, thereby providing a good compatibility with the existing networks.

Evidently, those skilled in the art may make various modifications and variations to the disclosure without departing from the spirit and scope of the disclosure. Accordingly, the disclosure is intended to encompass these modifications and variations thereof provided that they come into the scope of the claims appended to the disclosure and their equivalents.

## Claims

1. A call forwarding method, comprising:
notifying, by a called side, a calling side of information regarding a call forwarding of a first called user when the call to the called user is forwarded; and
connecting, by the calling side, the call to a forwarded second called user upon receiving the information.

2. The method according to claim 1, further comprising:
charging a calling user for communication with the second called user.

3. The method according to claim 1, further comprising:
presenting, by the calling side, a prompt whether to agree to communicate with the forwarded second called user before the calling side connects the call to the forwarded second called user; and
connecting the call to the forwarded second called user when the calling user agrees to communicate with the forwarded called user.

4. The method according to claim 3, wherein:
the prompt comprises information on a rate for communication from the calling user to the second called user; and
the communication is conducted at the communication rate when the calling user agrees to communicate with the second called user.

5. The method according to claim 2, further comprising:
authenticating the communication from the calling user to the second called user before connecting the call to the forwarded second called user; and
connecting the call to the second called user after passing the authentication.

6. The method according to claim 5, wherein: the authenticating of the communication from the calling user to the second called user comprises:
budgeting for a fee of communication from the calling user to the second called user and connecting the call from the calling user to the second called user when a budget result is enough for the communication from the calling user to the second called user.

7. The method according to claim 1, wherein the calling side is notified of the information regarding the call forwarding of the called user in the following messages:
an extended BCSM Event Report message, Initial Detect Point message or Apply Charging Report message.

8. A system for processing a call forwarding service, comprising a called-side switching device, a calling-side switching device and a charging device, wherein:
the called-side switching device is adapted to notify the calling-side switching device of information regarding a call forwarding of a first called user in the case that the call to the first called user is forwarded; and
the calling-side switching device is adapted to connect the call to a forwarded second called user in response to the received information.

9. The system according to claim 8, further comprising:
a charging unit adapted to charge a calling user for the process of communication with the second called user at a predetermined rate after the calling-side switching device connects the call to the forwarded second called user.

10. The system according to claim 8, wherein before the calling side connects the call to the forwarded called user:
the calling-side switching device presents a prompt of whether to agree to communicate with the forwarded called user; and
the calling-side switching device connects the call to the forwarded second called user when the calling user agrees to communicate with the forwarded called user.

11. The system according to claim 8, wherein before the calling-side switching device connects the call to the forwarded second called user:
the charging unit budgets for a fee of communication from the calling user to the second called user and connects the call from the calling user to the second called user when a budget result supports the communication from the calling user to the second called user.

12. A system for processing a call forwarding service, comprising a called-side switching device, a calling-side switching device and a calling-side charging device, wherein:
the called-side switching device is adapted to notify the calling-side charging device of a message regarding a call forwarding of a called user in the case that the call to the called user is forwarded;
the charging device is adapted to instruct the calling-side switching device to connect the call to the forwarded called user upon receiving the message regarding the call forwarding of the called user and to charge a calling user for the process of communication after forwarding when the calling-side switching device connects the call to the forwarded called user; and
the calling-side switching device is adapted to connect the call to the forwarded called user in response to the instruction of the calling-side charging device.

13. The system according to claim 12, wherein the charging device sends the instruction to the calling-side switching device and executes the charging process when the calling user agrees to communicate with the forwarded called user.

14. A switching device, comprising:
a message notifying unit adapted to notify a service control point to which a calling user belongs of a message regarding a call forwarding of a called user upon knowing that the call to be connected to the called user is forwarded; and
a connecting unit adapted to connect the call to the forwarded called user upon receiving an instruction to connect the call to the forwarded called user, which is sent from the service control point to which the calling user belongs.

15. The switching device according to claim 14, further comprising:
a message reporting unit adapted to report to the service control point to which the calling user belongs a notification message regarding the call forwarding of the called user, which is sent from a switching device where the called user is located, upon receiving the notification message when the calling user located at the switching device calls the called user.

16. The switching device according to claim 15, wherein the message reporting unit reports the message regarding the call forwarding of the called user to the service control point to which the calling user belongs in an extended BCSM Event Report message, Initial Detect Point message or Apply Charging Report message.

17. A service control point, comprising:
a connecting instructing unit adapted to instruct a switching device where a calling user is located to connect a call to a forwarded called user in accordance with a received message regarding a call forwarding of the called user; and
a charging unit adapted to charge the calling user for communication after forwarding.

18. The service control point according to claim 17, further comprising:
a prompting unit adapted to prompt the calling user of whether to agree to communicate with the forwarded called user in accordance with the received message regarding the call forwarding of the called user; wherein
the connecting instructing unit is further adapted to instruct the switching device where the calling user is located to connect the call to the forwarded called user when the calling user agrees to communicate with the forwarded called user.

19. A charging method, comprising:
notifying, by a called side, a calling side of information regarding a call forwarding of a first called user when the call to the first called user is forwarded;
connecting, by the calling side, the call to a forwarded second called user upon receiving the information; and
charging a calling user for the process of communication with the second called user.

20. The method according to claim 19, further comprising:
presenting, by the calling side, a prompt of whether to agree to communicate with the forwarded called user before the calling side connects the call to the forwarded called user; and
connecting the call to the forwarded second called user when the calling user agrees to communicate with the forwarded called user.

21. The method according to claim 20, wherein:
the prompt comprises information on a rate for communication from the calling user to the second called user; and
the communication is conducted at the communication rate when the calling user agrees to communicate with the second called user.

22. The method according to claim 19, 20 or 21, further comprising:
authenticating the communication from the calling user to the second called user before connecting the call to the forwarded second called user; and
connecting the call to the second called user after passing authentication.
